Europäisches Patentamt

(19) European Patent Office

Office européen des brevets

(11) Veröffentlichungsnummer : **0 141 440**
**B1**

(12) **EUROPÄISCHE PATENTSCHRIFT**

(45) Veröffentlichungstag der Patentschrift :
19.07.89

(51) Int. Cl.⁴ : **B 29 C 67/14** // B29L24:00

(21) Anmeldenummer : **84201273.4**

(22) Anmeldetag : **05.09.84**

(54) **Verfahren zur Herstellung von doppelwandigen Formkörpern zur Schalldämpfung von Fahrzeugen und Motoren allgemein mittels eines einzigen Pressvorgangs und durch dieses Verfahren erhaltener doppelwandiger Formkörper.**

(30) Priorität : **13.09.83 IT 2285983**

(43) Veröffentlichungstag der Anmeldung :
**15.05.85 Patentblatt 85/20**

(45) Bekanntmachung des Hinweises auf die Patenterteilung : **19.07.89 Patentblatt 89/29**

(84) Benannte Vertragsstaaten :
**DE FR GB SE**

(56) Entgegenhaltungen :
EP—A— 0 030 936
DE—A— 1 901 828
FR—A— 2 356 512
GB—A— 903 734
US—A— 3 281 301
US—A— 4 099 280
PATENT ABSTRACTS OF JAPAN, Band 6, Nr. 124 (M-141)[1002], 9. Juli 1982
PATENT ABSTRACTS OF JAPAN, Band 4, Nr. 111 (M-25)[593], 9. August 1980

(73) Patentinhaber : **MATEC HOLDING AG**
**Tollwiesstrasse 36**
**CH-8700 Küsnacht (CH)**

(72) Erfinder : **Lucca, Eusebio**
**19, Viale Lido**
**I-13040 Viverone (IT)**

(74) Vertreter : **Seifert, Helmut E.**
**RITSCHER & SEIFERT Patentanwälte VSP Kreuzstrasse 82**
**CH-8032 Zürich (CH)**

**Beschreibung**

Das vorliegende Erfindungspatent betrifft ein Verfahren zum Herstellen eines doppelwandigen Formkörpers zur Schallisolierung von Fahrzeugen und Motoren, bei dem zwei in die geöffneten Formhälften einer Pressform eingebrachte vor- bzw. halbpolymerisierte Faserschichten mittels einem Druckmedium, das in einen zwischen diesen Faserschichten angeordneten Vorformling eingeblasen wird, gegen die Innenwände der Formhälften gedrückt werden.

Zum Dämpfen des Schalls im Innenraum von Fahrzeugen und zur Schalldämmung der Verkleidung von Motoren werden vorteilhafterweise doppelwandige Formkörper aus kunststoffgebundenem Fasermaterial verwendet.

Bei einem bekannten Verfahren zum Herstellen solcher Formkörper werden zwei vorgeformte Halbschalen zusammengesetzt und miteinander verbunden. Dieses Verfahren benötigt viel Energie und Handarbeit und ist darum nicht wirtschaftlich und ermöglicht auch nicht, Formkörper mit konstanter Wandstärke und einer perfekt bearbeiteten oberfläche herzustellen.

Bei einem anderen in der JP-A-5'749'534 beschriebenen Verfahren werden zwei Faserschichten mit einem dazwischenliegenden hohlen Vorformling in eine heizbare Pressform eingebracht. Nach dem Schliessen der Pressform werden die Faserschichten durch Aufblasen des Vorformlings gegen die Innenwände der geheizten Pressform gedrückt und verfestigt. Dieses Verfahren hat den Vorteil, dass Formkörper mit einer besseren Oberflächenqualität hergestellt werden können, aber den Nachteil, dass ausser den beiden Faserschichten ein hohler Vorformling bereitgestellt werden muss und dass diese drei Teile sorgfältig geschichtet in die Pressform eingebracht werden müssen.

Der vorliegenden Erfindung lag darum die Aufgabe zugrunde, ein Verfahren zu schaffen, mit dem ein doppelwandiger Formkörper mit einer Oberflächenqualität, die keiner Nachbearbeitung bedarf, aus nur zwei zu pressenden Teilen einfach und energiesparend hergestellt werden kann.

Diese Aufgabe wird mit einem Verfahren der eingangs genannten Art gelöst, das dadurch gekennzeichnet ist, dass zur Bildung des Vorformlings jede Faserschicht vor dem Einbringen in die Pressform mit einer Folie aus thermoplastischem Material belegt und mit dieser zu einem Paket verbunden wird, und dass zwei solcher Pakete mit einander gegenüberliegenden Folien in der Pressform angeordnet werden, wo die nach dem Schliessen der Formhälften mindestens an ihren Rändern zusammengepressten Folien den Vorformling bilden und dass die Pressform auf eine Temperatur erwärmt wird, die ausreicht, um die polymerisierbaren Faserschichten vollständig zu polymerisieren und die Folien vollständig zu schmelzen.

Das erfindungsgemässe Verfahren ermöglicht das Herstellen doppelwandiger Formkörper in einem einzigen Pressvorgang, welche Formkörper eine konstante Wandstärke und eine perfekte Oberflächenqualität aufweisen. Solche Formkörper können nicht nur, wie eingangs erwähnt, zum Dämpfen des Schalls im Innenraum von Fahrzeugen und zur Schalldämmung der Verkleidung von Motoren und anderen Lärmquellen, sondern sie können auch als Luftführungsrohre bzw. -kanäle mit schallabsorbierenden Innenflächen, beispielsweise für Ventilationsanlagen, verwendet werden. Das Verfahren ermöglicht auch, doppelwandige Formkörper herzustellen, deren Innenraum mit einem schallabsorbierenden Material gefüllt ist.

Das erfindungsgemässe Verfahren wird anhand eines nachfolgend beschriebenen Beispiels unter Bezugnahme auf die Zeichnungen näher erläutert.

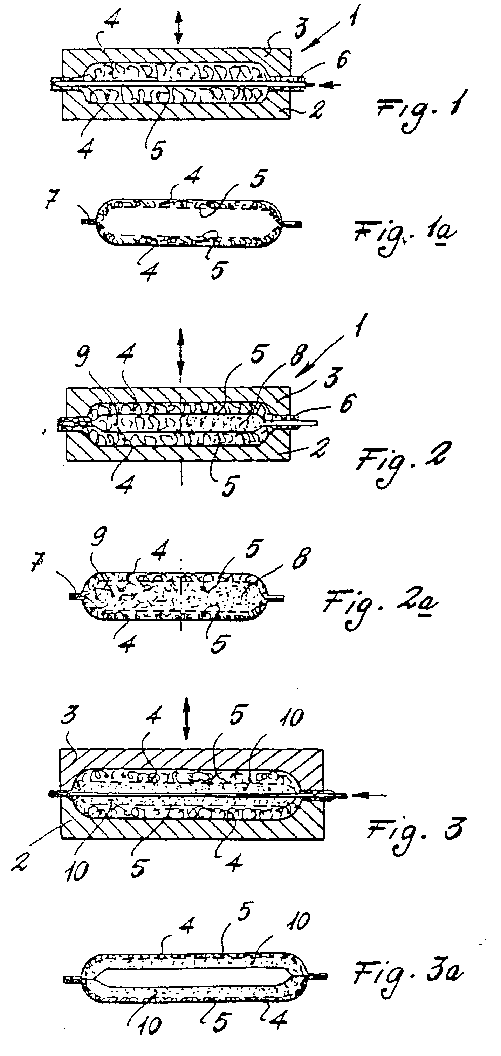

Gemäss den Fig. 1 und 1a der Zeichnungen wird die Pressform 1 verwendet, die aus einer ortsfesten unteren Formhälfte 2 und einer oberen beweglichen Formhälfte 3 besteht, wobei diese Formhälften mittels üblicher, hier nicht dargestellter Mittel aufgeheizt werden.

In die Aufnahmevertiefung der zwei Formhälften werden je ein Paket eingeführt, wobei jedes aus einer Schicht 4 aus Vorpolymerisat-Fasern besteht, beispielsweise von der Art wie in dem von der Anmelderin am 22.11.1979 hinterlegten italienischen Patent Nr. 1'126'376, mit einer Dichte von 40 kg/m³ und mit einer thermoplastischen Folie oder einem Ueberzug 5 der ionomerischen Art von einer Dicke zwischen 30. 300 Mikron, zweckmässig etwa 100 Mikron.

Die Schichten aus Fasermaterial 4 werden an die internen Wände der entsprechenden Formpresshälften anliegend eingebracht, so, dass die Folien 5 einander gegenüber liegen.

Nun wird Luft unter einem Druck von etwa 2 bar und bei einer Temperatur von etwa 200°C mittels einer Düse 6 zwischen die beiden einander gegenüberliegenden genannten Abdeckfolien eingeblasen, wodurch sicher sowohl die vollständige Polymerisation der Faserschichten 4 wie auch das Schmelzen der Folie 5 bewirkt werden. Durch dieses Vorgehen wird zugleich erreicht, dass die Luft Druck auf die Folie 5 ausübt und so die Schichten 4 gegen die internen Wände der entsprechenden Pressformhälften andrückt. Die Schichten nehmen dadurch genau die Form der Pressvorlage, d. h. das gewünschte Profil, an.

Speziell wegen der erhöhten Lufttemperatur schmilzt die Folie 5 und die Schichten 4 polymerisieren aus. Die letzteren werden dadurch ausgehärtet und übernehmen, im Gebrauch der Formkörper, die tragende Funktion der doppelwandigen Insonoriations-Formkörper.

Die mittels des beschriebenen Verfahrens erhaltenen Formkörper erfordern keinerlei Nachbearbeitung, speziell nicht entlang der Ränder 7, da die letzteren aufgrund der thermomechanischen Druckeinwirkung der beiden Pressformhälften 2 und 3 fest miteinander verbunden sind.

Gemäss den Fig. 2 und 2a ist es, unter Verwendung der Pressform 1, möglich, doppelwandige Formkörper zu erhalten, welche zwischen den gegenüberliegend angeordneten Folien 5 mit einem schallabsorbierenden Material gefüllt sind. Die Porosität des eingelegten, schallabsorbierenden Materials, beispielsweise Polyurethanschaum 8 mit hohem Anteil an offenen Schaumzellen oder auch Vorbzw. Halbpolymerisat-Fasern 9 des gleichen Materials wie die Schichten 4 erlaubt es der Druckluft, durch das genannte Einfüllmaterial durchzutreten und, wie oben beschrieben, auf die Folien 5 einzuwirken und die Faserschichten 4 zu komprimieren. Gemäss der Masse des Fasermaterials, ausgedrückt in kg pro m$^2$, und der Dicke der eingesetzten Folie zur Konstitution der Schichten 4 und 5 wird es, naturgemäss, möglich sein, doppelwandige Isolations-Formkörper zu erhalten, deren äussere Schalen mehr oder weniger dicht und/oder mehr oder weniger porös sein werden.

Gemäss den Fig. 3 und 3a besteht jedes Einzelpaket aus einer Schicht Fasermaterial 4 und aus einer Folie 5, die vorgängig mit einem Belag 10 aus schallabsorbierendem Material, beispielsweise Polyurethanschaum mit hohem Anteil an offenen Zellen, verbunden worden ist. Auch in diesem Fall bewirkt die Druckluft, die durch die Beläge 10 hindurchtritt, das Anpressen der Schichten 4 gegen die Innenseite der entsprechenden Pressformhälften. Die Schichten 10 werden aber sowohl hinsichtlich Dichte wie auch hinsichtlich spezifischem Gewicht Werte behalten, welche den entsprechenden Ausgangswerten sehr nahe liegen; die genannten Materialien werden also weiterhin schallabsorbierend wirken.

Die erfindungsgemäss erhaltenen Formkörper können natürlich einen der Verwendung angepassten äusseren End-Ueberzug aufweisen; dieser Ueberzug kann während des Pressvorganges angebracht werden.

## Patentansprüche

1. Verfahren zum Herstellen eines doppelwandigen Formkörpers zur Schallisolierung von Fahrzeugen und Motoren, bei dem zwei in die geöffneten Formhälften einer Pressform eingebrachte vor- bzw. halbpolymerisierte Faserschichten mittels einem Druckmedium, das in einen zwischen diesen Faserschichten angeordneten Vorformling eingeblasen wird, gegen die Innenwände der Formhälften gedrückt werden, dadurch gekennzeichnet, dass zur Bildung des Vorformlings jede Faserschicht (4) vor dem Einbringen in die Pressform (1) mit einer Folie (5) aus thermoplastischem Material belegt und mit dieser zu einem Paket verbunden wird, und dass zwei solcher Pakete mit einander gegenüberliegenden Folien in der Pressform angeordnet werden, wo die nach dem Schliessen der Formhälften mindestens an ihren Rändern zusammengepressten Folien den Vorformling bilden und dass die Pressform auf eine Temperatur erwärmt wird, die ausreicht, um die polymerisierbaren Faserschichten vollständig zu polymerisieren und die Folien vollständig zu schmelzen.

2. Verfahren gemäss Patentanspruch 1, dadurch gekennzeichnet, dass vor dem Schliessen der Pressform (1) zwischen die Folien (4) der beiden Pakete (4, 5) eine Schicht (8 bzw. 9) schallabsorbierenden Materials eingelegt wird.

3. Verfahren gemäss Patentanspruch 1, dadurch gekennzeichnet, dass jedes Paket aus einer Schicht (4) Vorpolymerisat-Fasermaterial und aus einer Folie (5), die vorgängig mit einer Lage (10) eines schallabsorbierenden, porösen Materials verbunden wurde, besteht.

## Claims

1. A method of producing a double-walled moulded body for acoustic insulation of vehicles and engines, in which two pre- or half-polymerized fiber layers inserted into the opened die portions of a pressure mold are pressed towards the inner walls of the die portions by means of a pressure medium which is blown into a preform arranged between said fiber layers, characterized in that, for making the preform, each fiber layer (4) is provided, prior to insertion into the pressure mold (1), with a film (5) of a thermoplastic material and combined therewith to form a package, that two such packages are arranged in the pressure mold with their films adjacent each other and are pressed unto each other at least at their margins so as to produce the preform upon closing the pressure mold, and that the pressure mold is heated to a temperature which is sufficient to completely polymerize the polymerizable fiber layers and to completely melt the films.

2. The method of claim 1, characterized in that prior to closing the pressure mold (1) a layer (8 or 9, respectively) of a sound-absorbing material is arranged between the films (4) of the two packages (4, 5).

3. The method of claim 1, characterized in that each package consists of a layer (4) of prepolymer-fiber material and of a film (5) pre-connected with a layer (10) of a sound-absorbing porous material.

## Revendications

1. Procédé pour la fabrication de corps moulés à double-parois, pour l'insonorisation de véhicules et de moteurs, dans lequel deux couches de fibres pré- ou semi-polymérisés, introduites dans les demi-moules ouvertes d'un moule, sont appliquées contre les parois intérieures des demi-moules à l'aide d'un milieu sous pression soufflé dans un préformé, caractérisé en ce que, pour la formation du préformé, chaque couche de fibres (4) est garnie d'une feuille (5) en matière thermoplastique et reliée en un paquet avec celle-ci, avant d'être introduite dans le moule, et en ce que deux tels paquets sont disposés avec les feuilles se faisant face dans le moule, où ces feuilles pressées ensemble au moins le long de leurs bords après la fermeture du moule forment le préformé, et en ce que le moule est chauffé à une température suffisant pour entièrement polymériser les couches de fibres polymérisables et entièrement fondre les feuilles.

2. Procédé selon la revendication 1, caractérisé en ce qu'une couche (8,9 respectivement) d'une matière insonorisante est disposée entre les feuilles (4) des deux paquets (4, 5) avant la fermeture du moule.

3. Procédé selon la revendication 1, caractérisé en ce que chaque paquet consiste en une couche (4) de matière fibreuse prépolymérisée et en une feuille (5) reliée préalablement à une couche (10) d'une matière insonorisante poreuse.

Fig. 1

Fig. 1a

Fig. 2

Fig. 2a

Fig. 3

Fig. 3a